# EUROPÄISCHE PATENTANMELDUNG

(11) **EP 1 657 142 A1**
(43) Veröffentlichungstag der Anmeldung: **17.05.2006**
(21) Anmeldenummer: 04026874.0
(22) Anmeldetag: 12.11.2004
(51) Int. Cl.: B62D 27/02, F16B 11/00

(54) **Baugruppenverbindung**

(71) Anmelder: Alcan Technology & Management Ltd., 8212 Neuhausen am Rheinfall (CH)
(72) Erfinder: Paradies, Rolf, 8117 Fällanden (CH); Wieschermann, Jochen, 88682 Salem (DE); Waldeck, Klaus-Dieter, 8172 Niederglatt (CH); Wahl, Patrick M., 6343 Rotkreuz (CH); Dallo, Gino, 5600 Lenzburg (CH)
(74) Vertreter: Burkhart, Hans

(57) **Zusammenfassung**

Die Erfindung betrifft eine Baugruppenverbindung (1), enthaltend eine erste und zweite Baugruppe (2, 3), welche über eine Klebstoffverbindung miteinander verbunden sind. Die Erfindung zeichnet sich dadurch aus, dass die Klebstoffverbindung zwischen den beiden Baugruppen (2, 3) wenigstens aus drei Schichten besteht, mit einer ersten (4), auf der ersten Baugruppe (2) und einer zweiten (6), auf der zweiten Baugruppe (3) angeordneten Klebschicht aus einem Reaktionskleber und einer zwischen der ersten und zweiten Klebschicht (4, 6) angeordneten, dritten Schicht (5) aus einem elastischen, insbesondere gummi-elastischen, Werkstoff.

## Beschreibung

Die Erfindung betrifft eine Baugruppenverbindung, enthaltend eine erste und zweite Baugruppe, welche über eine Klebstoffverbindung miteinander verbunden sind.

Bei der Herstellung von grossflächigen Klebstoffverbindungen zwischen Baugruppen aus unterschiedlichen Werkstoffen im Fahrzeugbau müssen diese drei wesentliche Voraussetzungen erfüllt sein:
a) die Klebstoffverbindung muss die durch Temperaturunterschiede von bis zu 100°C hervorgerufenen unterschiedlichen Wärmedehnungen der Fügepartner kompensieren, resp. die in der Fügezone aufgebauten Spannungen unbeschadet aufnehmen oder abbauen;
b) die Klebstoffverbindung muss die durch mechanische Belastungen in die Baugruppe eingeleiteten Spannungsspitzen unbeschadet aufnehmen;
c) die Klebstoffverbindung muss die zwischen den Baugruppen auftretenden, fertigungsbedingten Toleranzen ausgleichen.

Im Bereich der Klebstoffe sind zwei Gruppen von Klebstoffen bekannt. Eine erste Gruppe von Klebstoffen betrifft die sogenannten Reaktionskleber, auch Konstruktionskleber oder Metallkleber genannt, welche einen vergleichsweise hohen E-Modul (Elastizitätsmodul) aufweisen. Sie reagiert daher empfindlich auf Stoss- bzw. Spannungsbelastungen, wie sie bsp. bei unterschiedlicher Wärmedehnung der Fügepartner oder bei struktureller Beanspruchung von grossvolumigen Baugruppen vorkommen.

Diese Klebstoffverbindungen sind wegen ihrem geringen Schichtdickenauftrag schlecht in der Lage, grössere Fertigungs-Toleranzen auszugleichen. Ferner zeigen Reaktionskleber bei tiefen Temperaturen ein zunehmend sprödhartes Verhalten.

Eine zweite Gruppe von Klebstoffen betrifft die sogenannten elastischen Kleber, welche einen vergleichsweise niedrigeren E-Modul aufweisen und sich auch bei tiefen Temperaturen elastisch verhalten. Diese Klebstoffe werden in grossen Schichtdicken (ab 2 mm) angewendet und eignen sich daher zum Ausgleich von Toleranzen zwischen den Baugruppen.

Die Anwendung von elastischen Klebstoffverbindungen zwischen Baugruppen ist jedoch mit dem Nachteil behaftet, dass sie eine geringere Adhäsion zu den Fügepartnern aufweisen.

Aufgabe vorliegender Erfindung ist es deshalb, eine Klebstoffverbindung für Baugruppen, insbesondere für Grossbaugruppen, vorzuschlagen, welche eine dauerhafte Verbindung der Bauteile herbeiführt, und gleichzeitig in der Lage ist, unbeschadet Spannungen abzufangen bzw. abzubauen und Toleranzen auszugleichen.

Zur erfindungsgemässen Lösung der Aufgabe führt, dass die Klebstoffverbindung zwischen den beiden Baugruppen aus drei Kleberschichten besteht, mit einer ersten, auf der ersten Baugruppe und einer zweiten, auf der zweiten Baugruppe angeordneten Klebschicht aus einem Reaktionskleber und einer zwischen der ersten und zweiten Klebschicht angeordneten, dritten Schicht aus einem elastischen, insbesondere gummi-elastischen, Werkstoff.

Der elastische Werkstoff kann z.B. Chloropren sein.

Die drei genannten Schichten liegen im Schichtaufbau bevorzugt in unmittelbarer Abfolge vor.

Die dritte Schicht ist bevorzugt ein Elastomer. Sie zeichnet sich durch einen nahezu gleich definierbaren E-Modul über den benötigten Temperaturbereich aus.

Die Dritte Schicht wird bevorzugt in einer Dicke von mehr als 1 mm aufgetragen. Die Dicke der dritten Schicht beträgt bevorzugt weniger als 10 mm, insbesondere weniger als 6 mm.

Der Reaktionskleber ist ein chemisch härtender Kleber. Die Härtung kann durch, Polymeristation, Polyaddition und/oder durch Polykondensation erfolgen. Der Reaktionskleber kann ein Ein-, Zwei- oder Mehrkomponentensystem sein. Der Reaktionskleber kann bsp. ein duroplastischer, elastischer oder thermoplastischer Kleber sein.

Die erste und zweite Klebschicht sind bevorzugt aus einem Epoxid-, Polyurethan- oder Acrylatkleber realisiert. Die erste und zweite Klebschicht können aus demselben oder aus verschiedenen Reaktionsklebern bestehen. Ebenfalls können die Schichtdicken unterschiedlich sein.

Die Klebeflächen der Baugruppen können zwecks Erhöhung der Hafteigenschaften mittels chemischen oder mechanischen Massnahmen vorbehandelt sein. Ebenso kann die Oberfläche der dritten Schicht zwecks Erhöhung der Haftung zu den Reaktionsklebstoffen chemisch oder mechanisch vorbehandelt sein. Die genannten Oberflächen können gegebenenfalls mit einem Haftvermittler versehen sein.

Die erste Baugruppe oder wenigstens deren Fügeabschnitt besteht bevorzugt aus einem anderen Werkstoff als die zweite Baugruppe oder wenigstens deren Fügeabschnitt.

Die erste Baugruppe oder wenigstens deren Fügeabschnitt ist bevorzugt aus Aluminium bzw. aus einer Aluminiumlegierung. Die zweite Baugruppe oder wenigstens deren Fügeabschnitt ist bevorzugt aus einem Stahlwerkstoff.

Die vorliegende Baugruppenverbindung eignet sich insbesondere zur Verbindung von Baugruppen, insbesondere Grossbaugruppen, im Fahrzeugbau. Die Baugruppenverbindung findet insbesondere Verwendung in der Konstruktion von Massentransportmitteln für die Strasse oder Schiene zum Transport von Personen oder Gütern. Dies können Busse, wie Reisebusse, Omnibusse, oder Schienenfahrzeuge zum Personentransport sein.

Ferner findet die Baugruppenverbindung auch Anwendung in Transportmitteln wie Schiffen oder Flugzeugen sowie im Hoch- und Tiefbau oder in der Architektur im allgemeinen.

In einer besonders bevorzugten Verwendung der erfindungsgemässen Klebstoffverbindung ist die eine Baugruppe, vorzugsweise die erste Baugruppe, ein Wagenkastendach und die andere Baugruppe, vorzugsweise die zweite Baugruppe, ein Grundgerippe eines Fahrzeuges, insbesondere eines Busses oder eines Schienenfahrzeuges.

Die Klebstoffverbindung zwischen Wagenkastendach und Grundgerippe verläuft bevorzugt in Fahrzeuglängsrichtung in Ausführung einer Art Linienverbindung. Die Klebstoffverbindung erfolgt bevorzugt über in Fahrzeugrichtung verlaufende Längsprofile am Grundgerippe und am Wagenkastendach.

Das Wagenkastendach besteht wenigstens im Fügeabschnitt bevorzugt aus einem Aluminiumwerkstoff und das Grundgerippe besteht wenigstens im Fügeabschnitt bevorzugt aus einem Stahlwerkstoff. Der Fügeabschnitt kann durch die besagten Längsprofile gebildet werden.

Die erfindungsgemässe Baugruppenverbindung eignet sich insbesondere zur Verbindung von grossformatigen Baugruppen mit grossflächigen Fügebereichen oder mit Fügeflächen von grosser Längenausdehnung. Vorliegende Baugruppenverbindung eignet sich insbesondere für strukturell beanspruchte Konstruktionen, auf welche Kraftspitzen einwirken. Solche Kraftspitzen können bsp. punktuell durch Seitenwandsäulen im Grundgerippe eines Fahrzeuges in die Baugruppenverbindung eingeleitet werden.

Ferner eignet sich vorliegende Baugruppenverbindung für Konstruktionen, bei welchen durch die unterschiedliche Wärmedehnung verschiedener Werkstoffe Spannungen auf die Baugruppenverbindung übertragen werden, wie dies bsp. bei Aluminium-Stahl-Hybridkonstruktionen im Fahrzeugbau der Fall ist.

Weitere Einzelheiten der Erfindung ergeben sich aus der nachfolgenden Beschreibung anhand der Zeichnungen; diese zeigen schematisch in
- Fig. 1:: eine schematische Darstellung einer mehrschichtigen Klebstoffverbindung;
- Fig. 2:: eine schematische Darstellung einer Baugruppenverbindung.

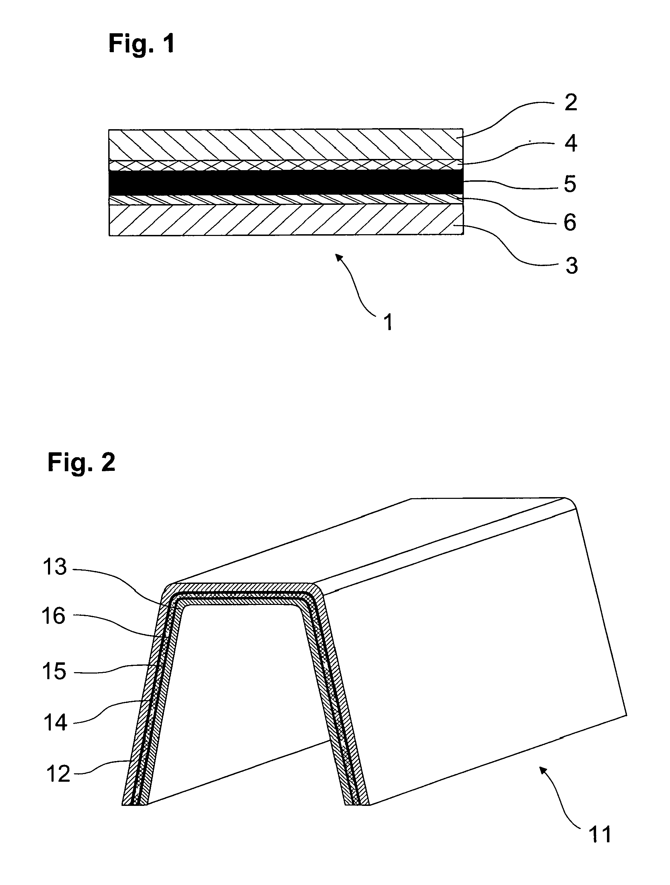

Die Klebstoffverbindung 1 gemäss Fig. 1 enthält ein erstes und zweites Bauteil 2, 3. Auf dem ersten Bauteil 2 ist eine erste Klebschicht 4 und auf dem zweiten Bauteil 3 eine zweite Klebschicht 6 angeordnet. Zwischen der ersten und zweiten Klebschicht 4, 6 ist eine gummi-elastische, dritte Schicht 5 angeordnet. Die Bauteile 2, 3 können als Baugruppen vorliegen.

Die Baugruppenverbindung 11 gemäss Fig. 2 enthält zwei U-förmige, ineinandergeschobene Längsprofile 12, 13, auf welchen jeweils eine erste und zweite Klebschicht 14, 16 aus einem Reaktionsklebstoff angeordnet ist. Zwischen der ersten und zweiten Klebschicht 14, 16 liegt eine gummi-elastische Schicht 15, welche die erste und zweite Klebschicht 14, 16 miteinander verbindet.

## Patentansprüche

1. Baugruppenverbindung (1), enthaltend eine erste und zweite Baugruppe (2, 3), welche über eine Klebstoffverbindung miteinander verbunden sind,
**dadurch gekennzeichnet, dass**
die Klebstoffverbindung zwischen den beiden Baugruppen wenigstens aus drei Schichten besteht, mit einer ersten (4), auf der ersten Baugruppe (2) und einer zweiten (6), auf der zweiten Baugruppe (3) angeordneten Klebschicht aus einem Reaktionskleber und einer zwischen der ersten und zweiten Klebschicht (4, 6) angeordneten, dritten Schicht (5) aus einem elastischen, insbesondere gummi-elastischen, Werkstoff.

2. Baugruppenverbindung, nach Anspruch 1, wobei die dritte Schicht ein elastischer, insbesondere gummi-elastischer, Klebstoff ist.

3. Baugruppenverbindung nach einem der Ansprüche 1 bis 2, wobei die dritte Schicht ein Elastomer ist.

4. Baugruppenverbindung nach einem der Ansprüche 1 bis 3, wobei die erste und zweite Klebschicht aus einem Epoxid-, Polyurethan- oder Acrylatkleber bestehen kann.

5. Baugruppenverbindung nach einem der Ansprüche 1 bis 4, wobei die erste Baugruppe oder wenigstens deren Fügeabschnitt aus einem anderen Werkstoff besteht als die zweite Baugruppe oder wenigstens deren Fügeabschnitt.

6. Baugruppenverbindung nach einem der Ansprüche 1 bis 5, wobei die erste Baugruppe oder wenigstens deren Fügeabschnitt aus einem Aluminiumwerkstoff und die zweite Baugruppe oder wenigstens deren Fügeabschnitt aus einem Stahlwerkstoff sind.

7. Baugruppenverbindung nach einem der Ansprüche 1 bis 6, wobei die eine Baugruppe, vorzugsweise die erste Baugruppe, ein Wagenkastendach und die andere Baugruppe, vorzugsweise die zweite Baugruppe, ein Grundgerippe eines Fahrzeuges insbesondere eines Busses ist.

8. Baugruppenverbindung nach Anspruch 7, wobei die erste Baugruppe wenigstens im Fügeabschnitt aus einem Aluminiumwerkstoff und die zweite Baugruppe wenigstens im Fügeabschnitt aus einem Stahlwerkstoff ist.
